# EUROPEAN PATENT APPLICATION

(11) **EP 2 894 066 A1**
(43) Date of publication of application: **15.07.2015**
(21) Application number: 14150561.0
(22) Date of filing: 09.01.2014
(51) Int. Cl.: B60R 19/34

(54) **Vehicle with bumper mounted on crash box**

(71) Applicant: Ford Otomotiv Sanayi Anonim Sirketi, 34885 Sancaktepe/Istanbul (TR)
(72) Inventor: Erdener, Mustafa, 34852 Maltepe, Istanbul (TR); Arik, Haluk, 34854 Maltepe, Istanbul (TR); Süslüoglu, Mehmet Murat, Bornova,Izmir (TR)
(74) Representative: Illing, Rolf

(57) **Abstract**

A vehicle is provided. The vehicle comprises a crush can (11) including a front end (21) and a rear end (22), and a bumper including a bumper beam. The crush can (11) is a hollow girder arranged along a longitudinal axis (29). The crush can (11) is fixed with its front end (21) to the bumper beam and with its rear end (22) to a supporting structure of the vehicle. According to the present invention, a tube (16) is arranged inside the crush can (11) and extends along the longitudinal axis (29) of the crush can (11). The tube (16) has a smaller length (26) than the crush can (11).

## Description

The present invention relates to a vehicle comprising a crush can and a bumper including a bumper beam, wherein the crush can is a hollow girder which is fixed with its front end to the bumper beam and which is fixed with its rear end to a supporting structure of the vehicle.

The concept of crush cans is known in the prior art. Bumper beam and two crush cans assembly absorb low speed crash kinetic energy in order to save the parts in front and rear of the vehicle. The conventional design could not absorb low speed crash kinetic energy in a short distance due to its unstable force-deflection characteristic and more parts of the vehicle could be damaged in a crash.

It is an objective of the present invention to provide a vehicle which has an improved crash resistance, in particular at low speed crashes.

According to the present invention, this objective is achieved by a vehicle as claimed in claim 1. The depending claims contain further developments of the invention.

The inventive vehicle comprises a crush can and a bumper including a bumper beam. The crush can, which includes a front end and a rear end, is a hollow girder arranged along a longitudinal axis. The crush can is fixed with its front end to the bumper beam and with its rear end to a supporting structure of the vehicle. According to the present invention, a tube is arranged inside the crush can and extends along the longitudinal axis of the crush can. The tube has a smaller length than the crush can.

By the present invention, the crushing resistance of the crush can is increased. The number of damaged parts in a crash is reduced, in particular in low speed crashes. The inventive assembly can absorb more crash energy in a shorter crushing distance. Thus, the crush can can be dimensioned shorter. Therefore, the possibilities of the vehicle design are increased.

In a further development of the inventive vehicle, the crush can includes an upper shell and a lower shell, wherein the upper shell and the lower shell overlap each other.

By this measure, it is possible to combine different materials for making the crush can.

In a still further development of the inventive vehicle, the tube comprises a front end which is fixed to the bumper beam. In particular, the front end of the tube is welded to the bumper beam.

By this measure, in a crash situation the tube constrains the inboard deflection of the crush can after a first buckling. Thus, the degree of reducing the crushing resistance of the crush can is decreased. The free edge of the tube creates a second load path after a second buckling and consequently this stabilizes the crushing resistance. The crash kinetic energy can be absorbed in a shorter distance and more efficiently.

In a still further development of the inventive vehicle, the crush can has a smaller width at its front end than at its rear end.

By this measure, the crush can can be deformed already at lower crash forces. This prevents other parts from being damaged.

In a still further development of the inventive vehicle, the crush can comprises at least one impression in the area of the tube. By said impression the width of the crush can is reduced.

By this measure, a predetermined buckling point is defined. Thus, in a crash situation the first buckling will appear at this point. The buckling process can better be predicted and controlled.

In a still further development of the inventive vehicle, the crush can includes at least one bulge.

By this measure, a predetermined stiffness area is defined. The buckling process can better be predicted and controlled.

Further features, properties and advantages of the present invention will become clear from the following description of embodiments in conjunction with the accompanying drawings.
- Figure 1: shows an inventive vehicle.
- Figure 2: shows a crush can of the vehicle.
- Figure 3: shows a sectional view of the crush can.

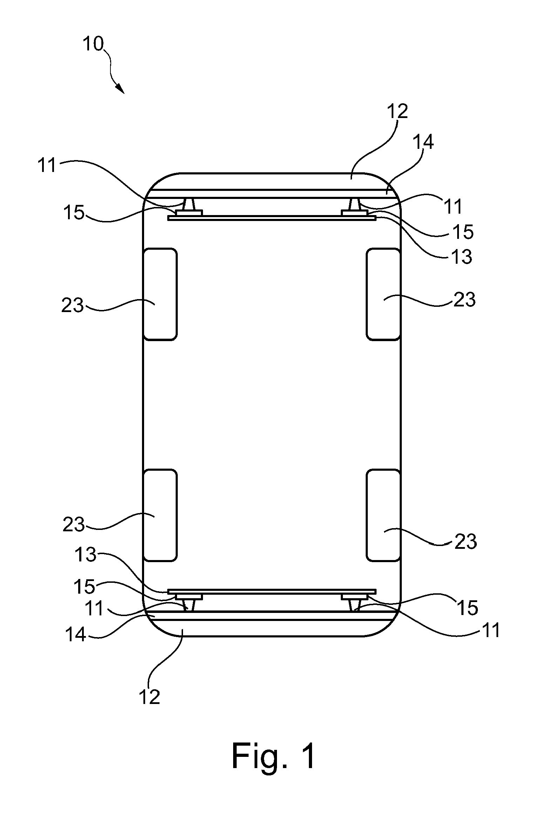

The present invention will now be described, by way of example, with reference to the accompanying drawings, in which Fig. 1 schematically shows an inventive vehicle 10.

The inventive vehicle 10 comprises a bumper 12 including a bumper beam 14. The bumper 12 is mounted on a supporting structure 13 of the vehicle 10 by at least one crush cam 11. In the shown embodiment, which represents a four wheel 23 vehicle 10, the vehicle 10 comprises two bumpers 12, as usual. Each bumper 12 is fixed by two crush cans 11.

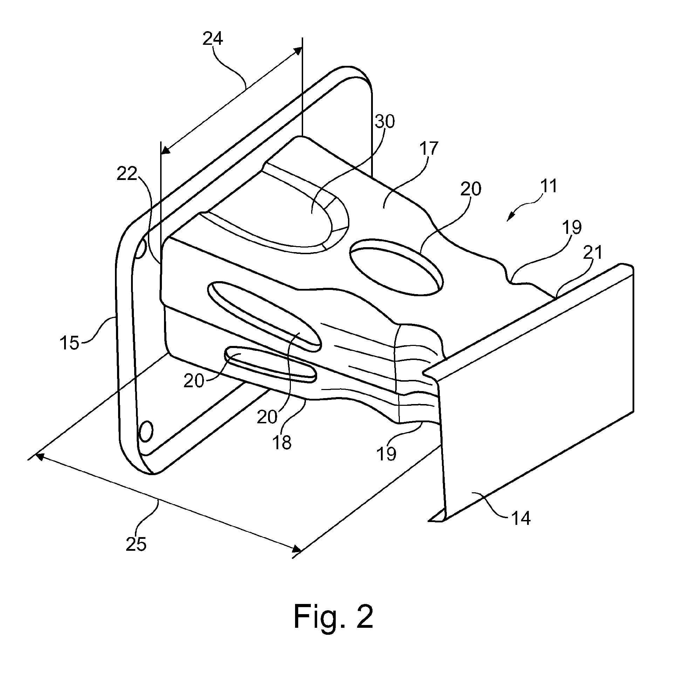

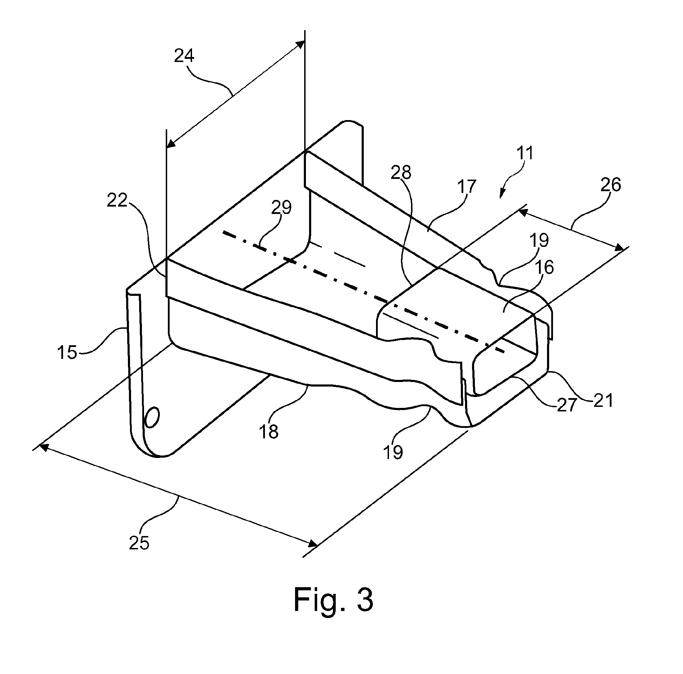

A crush can 11 of the inventive vehicle 10 is shown in detail in Fig. 2 and in Fig. 3. The crush can 11 is formed by a hollow girder that extends along a longitudinal axis 29, which is parallel to the roll axis of the vehicle 10. The crush can 11 may be formed of two shells, an upper shell 17 and a lower shell 18. In particular, the upper shell 17 and the lower shell 18 are arranged so as to partly overlap each other. Thus, the crush can 11 is at least partly double-walled. In the shown embodiment, two sidewalls of the crush can 11 are double-walled. The upper shell 17 and the lower shell 18 may be fixed to each other by welding or riveting. In particular, the crush can 11 is made of metal.

According to the present invention, the crush can 11 is fixed with its front end 21 to the bumper beam 14 and with its rear end 22 to the supporting structure 13 of the vehicle 10. The term "fixed" includes directly fixed and indirectly fixed. "Directly fixed" means that the crush can 11 is arranged adjacent to the supporting structure 13 and connected to this. And "indirectly fixed" means that the crush can 11 is fixed to the supporting structure 13 by an auxiliary member. In the shown embodiment, the crush can 11 is indirectly fixed with its rear and to the supporting structure 13. The shown crush can 11 is fixed to a body fixing plate 15 and the body fixing plate 15 is fixed to the supporting structure 13 of the vehicle 10. The body fixing plate 15 is the auxiliary member. The supporting structure 13 may be a crossbeam, for example.

According to the present invention, a tube 16 is arranged inside the crush can 11. The length 26 of the tube 16 is smaller than the length 25 of the crush can 11. In particular, the length 26 of the tube 16 is less than half the length 25 of the crush can 11. The tube 16 extends along the same longitudinal axis 29 as the crush can 11. In particular, the tube 16 is arranged at a front area of the crush can 11. In the present embodiment a front end 27 of the tube 16 is fixed to the bumper beam 14, as is the front end 21 of the crush can 11. In particular, the front end 27 of the tube 16 may be fixed to the bumper beam 14 by welding. A rear end 28 of the tube 16 is free.

The tube may be formed by a hollow body or by a full body. In particular, the tube 16 may be made of metal.

The shown embodiment of the crush can 11 has a smaller width 24 at its front end 21 than at its rear end 22. It is also conceivable that the tube 16 has a varying width, where the width at the front end 27 of the tube 16 is smaller than the width at its rear end 28.

The crush can 11 of the inventive vehicle 10 may comprise at least one impression 19 in the area of the tube 16. The width 24 of the crush can 11 is reduced by the impression 19. In the shown embodiment, the crush can 11 comprises two impressions 19, which are arranged in opposite sides of the crush can 11 at the double-walled areas. By the at least one impression 19 a predetermined buckling point is formed.

At the same time the crush can 11 may comprise at least one bulge 20. The embodiment shown in Fig. 2 includes three bulges 20. By the at least one bulge 20 the stiffness of the respective area is increased. It is also conceivable that the crush can 11 includes at least one dent 30 for increasing the stiffness of the respective area. For pressure compensation the crush can 11 may comprise holes.

### List of reference numerals

- 10: Vehicle
- 11: Crush can
- 12: Bumper
- 13: Supporting structure
- 14: Bumper beam
- 15: Body fixing plate
- 16: Tube
- 17: Upper shell
- 18: Lower shell
- 19: Impression
- 20: Bulge
- 21: Crush can front end
- 22: Crush can rear end
- 23: Wheel
- 24: Crush can width
- 25: Crush can length
- 26: Tube length
- 27: Tube front end
- 28: Tube rear end
- 29: Longitudinal axis
- 30: Dent

## Claims

1. A vehicle (10) comprising a crush can (11) including a front end (21) and a rear end (22), and a bumper (12) including a bumper beam (14), wherein the crush can (11) is a hollow girder arranged along a longitudinal axis (29), wherein the crush can (11) is fixed with its front end (21) to the bumper beam (14) and with its rear end (22) to a supporting structure (13) of the vehicle (10), **characterised in that** a tube (16) is arranged inside the crush can (11) and extends along the longitudinal axis (29) of the crush can (11), wherein the tube (16) has a smaller length (26) than the crush can (11).

2. The vehicle (10) as claimed in claim 1, wherein the crush can (11) includes an upper shell (17) and a lower shell (18), wherein the upper shell (17) and the lower shell (18) overlap each other.

3. The vehicle (10) as claimed in claim 1 or 2, wherein the tube (16) comprises a front end (27) which is fixed to the bumper beam (14).

4. The vehicle (10) as claimed in claim 3, wherein the front end (27) of the tube (16) is welded to the bumper beam (14).

5. The vehicle (10) as claimed in one of the claims 1 to 4, wherein the crush can (11) has a smaller width (24) at its front end (21) than at its rear end (22).

6. The vehicle (10) as claimed in one of the claims 1 to 5, wherein the crush can (11) comprises at least one impression (19) in the area of the tube (16) by which the width (24) of the crush can (11) is reduced.

7. The vehicle (10) as claimed in one of the claims 1 to 6, wherein the crush can (11) includes at least one bulge (20).
